(19) Europäisches Patentamt
European Patent Office
Office européen des brevets

(11) **EP 1 319 584 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.08.2013   Patentblatt 2013/34**

(51) Int Cl.:
**B62D 33/02** *(2006.01)*   **B60P 1/28** *(2006.01)*

(45) Hinweis auf die Patenterteilung:
**21.12.2005   Patentblatt 2005/51**

(21) Anmeldenummer: **02028012.9**

(22) Anmeldetag: **13.12.2002**

(54) **Kippmulde für ein Transportfahrzeug**

Dump body for a vehicle

Benne basculante pour un véhicule

(84) Benannte Vertragsstaaten:
**AT BE BG CH CY CZ DE DK EE ES FI FR GB GR IE IT LI LU MC NL PT SE SI SK TR**

(30) Priorität: **17.12.2001   DE 10161934**

(43) Veröffentlichungstag der Anmeldung:
**18.06.2003   Patentblatt 2003/25**

(73) Patentinhaber: **F.X. Meiller Fahrzeug- und Maschinenfabrik-GmbH & Co KG**
**80997 München (DE)**

(72) Erfinder:
• **Die Erfinder haben auf ihre Nennung verzichtet.**

(74) Vertreter: **Weickmann, Heinrich**
**Weickmann & Weickmann**
**Patentanwälte**
**Postfach 86 08 20**
**81635 München (DE)**

(56) Entgegenhaltungen:
**DE-A1- 19 808 123     DE-U1- 20 003 051**
**GB-A- 2 209 139     US-A- 1 469 320**
**US-A- 5 454 620     US-A- 5 681 095**

• **1987, DUBBEL TASCHENBUCH FÜR DEN MASCHINENBAU SPRINGER VERLAG 16 * Seite F7, Absatz 2.5.1 - Seite F8 ***

EP 1 319 584 B2

Printed by Jouve, 75001 PARIS (FR)

## Beschreibung

TECHNISCHES GEBIET

Die vorliegende Erfindung betrifft eine Kippmulde für ein Transportfahrzeug nach den Merkmalen des Oberbegriffs des Anspruchs 1.

STAND DER TECHNIK

Kippmulden für ein Transportfahrzeug, wie zum Beispiel ein Lastkraftwagen in der Form einer Zugmaschine mit Kippsattelanhänger oder dergleichen, dienen üblicherweise zur Beförderung schüttfähiger Transportgüter wie beispielsweise Sand, Kies, Bruchsteine, Bauschutt, Schrott und dergleichen. Die nach oben offene Kippmulde ist an ihrer zum Fahrzeugbug weisenden Vorderseite durch eine Wand verschlossen, während ihre zum Fahrzeugheck weisende Rückseite als Schüttöffnung ausgestaltet ist und zumeist eine hochgezogene Schütte oder eine verriegelbare Klappe oder Tür aufweist. In einer Neutralposition ist die Kippmulde horizontal auf einem Fahrgestellrahmen des Fahrzeuges angeordnet und kann in dieser Lage von oben mit dem Transportgut beladen werden, was vorwiegend maschinell geschieht. Zum Entladen des Transportgutes wiederum ist die Kippmulde um eine an einem hinteren Bereich des Fahrgestellrahmens angeordnete Querachse in eine schrägstehende Position kippbar, so dass das Transportgut durch Einwirkung der Schwerkraft entlang einer nun schiefen Ebene gleitet und über das rückwärtige geöffnete Ende der geneigten Kippmulde in deren Längsrichtung ausgeschüttet werden kann. Die für die Kippbewegung erforderliche Kraft wird in der Regel mit Hilfe einer an einer geeigneten Position, zum Beispiel im Bereich des vorderen Endes der Kippmulde und dem vorderen Ende des Fahrgestellrahmens, angreifenden Hubvorrichtung, wie beispielsweise ein ein- und ausfahrbaren Hydraulikzylinder, aufgebracht.

Konventionelle Kippmulden für ein Transportfahrzeug, welche einen Kippmuldenkörper mit einer im wesentlichen U-förmigen oder halbkreisförmigen Querschnittsform umfassen, sind üblicherweise aus einer Vielzahl von langgestreckten Wandungselementen zusammengesetzt, die an ihren oberen und unteren Längsrändern durch Schweißen fest miteinander verbunden sind und auf diese Weise eine aus einer Vielzahl von einzelnen Seitenwandelementen und Bodenelementen aufgebaute Kippmuldenkörperstruktur bilden. Bei den besagten Wandungselementen handelt es sich üblicherweise um Blechstreifen bzw. sogenannte Kantbleche oder aber auch um Strangpressprofile, insbesondere Aluminium-Strangpressprofile.

Bei Kippmuldenkörpern, die aus konventionellen Blechstreifen bzw. Kantblechen aufgebaut sind, werden die Bleche zur Herstellung der Kippmulde an ihren Längsrändern fest miteinander verschweißt. Bei Kippmuldenkörpern, die vollständig bzw. weitgehend aus zu einer Vielzahl von zusammengesetzten Strangpressprofilen aufgebaut sind, verfügen die Strangpressprofile üblicherweise an ihren Längskanten über eine Art Nut-/Federsystem. Auf diese Weise können die Profile bei der Herstellung der Kippmulde zunächst provisorisch zusammengefügt bzw. vormontiert und anschließend fest miteinander verschweißt werden. Derartige Kippmuldenkonstruktionen sind beispielsweise in der DE 198 08 123 A1 und der DE 198 08 122 A1 der Anmelderin beschrieben. Konstruktionen dieser Art haben eine Vielzahl von Vorteilen.

Kippmulden werden in der Regel in kleineren Serien bzw. in vergleichsweise geringen Stückzahlen entsprechend dem speziellen Anforderungsprofil eines Anwenders in oftmals variierenden Bauausführungen, wie z.B. Formen, Abmessungen usw., hergestellt. Fertigungstechnisch ist die Herstellung von Kippmulden daher relativ aufwendig und kostenintensiv. Es wäre deshalb wünschenswert, die Herstellung von Kippmulden insbesondere bei kleineren Serien bzw. variierenden Bauausführungen weiter rationalisieren und technisch vereinfachen zu können.

Ferner besteht bei konventionellen Kippmulden ein Problem dahingehend, dass der Bodenbereich der Kippmuldenkörper (insbesondere im Bereich der Schüttöffnung) infolge des durch das Schüttgut bewirkten Abriebs einem erhöhten Verschleiß unterworfen ist. Dieser Effekt ist bei Leichtbau-Kippmuldenkörpern aus Aluminium und/oder z.B. bei harten, kantigen oder spitzen Schüttgütern besonders ausgeprägt. Bei Kippmuldenkörpern mit einem halbkreisförmigen Querschnitt tritt zudem ein erhöhter Verschleiß auch deswegen auf, weil durch die Muldenform gewissermaßen eine "Zwangszentrierung" des Schüttgutes zur Muldenmitte und zum Bodenbereich hin erfolgt. Diese Zwangszentrierung ist an sich recht vorteilhaft, denn sie vermeidet ein Festhaften des Schüttgutes an den Kippmuldenecken und bewirkt somit einen vorteilhaften Selbstreinigungseffekt. Auch bietet sie eine höhere Standsicherheit der Kippmulde und des Fahrzeuges, welches die Kippmulde trägt, erleichtert ein schnelleres Abkippen und begünstigt eine sog. Straßenfertigerbeschickung (d.h. eine günstige Schüttwirkung bei der Verteilung von Straßenbau-Schüttgut). Jedoch ergibt sich aufgrund der Zwangszentrierung und der damit verbundenen Konzentration des Schüttgutes im Bodenbereich sowie einer erhöhten mechanischen Belastung gleichzeitig eine erhöhte Abrasion des Bodenbereichs des Kippmuldenkörpers.

Derzeit wird dieses Problem dadurch gelöst, dass man den Bodenbereich mit einer Stahlblechlage aufdoppelt. Diese Lösung wirft jedoch neue Probleme auf. So ist der Bereich unterhalb der Stahlblech-Aufdopplung einer erhöhten Korrosion ausgesetzt, da Wasser aus Niederschlägen oder Transportrückständen zwischen die Haut der Kippmulde und die Aufdoppelung gelangen kann. Bei unterschiedlichen Materialpaarungen können zudem elektrolytische Korrosionserscheinungen auftreten. Darüber hinaus wird durch die Stahlblech-Auskleidung besonders bei Aluminiumkippmulden der durch die Leichtbaukonstruktion erzielte Nutzlastgewinn teilweise wieder zunichte gemacht.

Eine gattungsgemäße Kippmulde ist beispielsweise aus der US-A-1 469 320 bekannt. Diese Kippmulde ist aus Stahl mit einem im Wesentlichen rechteckigen U-förmigen Querschnitt hergestellt und umfasst zwei Seitenteile, die an ihren unteren Längskanten über eine waagrechte Bodenplatte miteinander verbunden sind. An den Verbindungsstellen sind die Seitenteile sowie die Bodenplatte jeweils zu einem Flansch nach unten abgebogen und aneinander gefügt. Zur Verbindung der Seitenteile mit der Bodenplatte sind die zugehörigen, aneinander gefügten Flansche miteinander verschweißt, vernietet oder verschraubt.

Weiter ist aus der GB-A-2 209 139 eine Kippmulde für ein Transportfahrzeug bekannt, welches zwei im Querschnitt im Wesentlichen spiegelbildlich ausgebildete, langgestreckte, plattenförmige Seitenwandmodule aufweist, die an ihren unteren Längsrändern mit einem langgestreckten, plattenförmigen Bodenmodul verbunden sind. Die Seitenwandmodule und das Bodenmodul sind aus einer Aluminiumlegierung gebildet und an den einander zugeordneten Längsrändern miteinander verschweißt, vernietet, verklebt oder mittels einer Schraubverbindung miteinander verbunden.

Aus der US-A-5 681 095 ist eine weitere Kippmulde bekannt, welche ein plattenförmige Bodenmodul und zwei an den Längsrändern des Bodenmoduls aufrecht stehende und mit dem Bodenmodul verschraubte Seitenwandmodule aufweist. Das Bodenmodul besteht aus einer Stahlplatte und ist mit Trägerelementen unterhalb der Stahlplatte versteift. Die Seitenwandnmodule sind aus Aluminium-Hohlprofilelementen gebildet, so dass sie eine doppelwandige Struktur aufweisen. An der Bodenplatte aus Stahl sind Befestigungswinkel aus Stahl angeschweißt, an welchen die Aluminiun-Seitenwände mit der Bodenplatte verschraubt sind.

Weiterhin ist in der US-A-5 454 620 eine Kippmulde aus Aluminium offenbart, welche im Querschnitt halbkreisförmig oder kreisförmig gestaltet ist und an verschiedenen Stellen durch in Längsrichtung der Kippmulde verlaufende Schienen zur Erhöhung der Gesamtfestigkeit der Kippmulde versteift ist Die Versteifungsschienen sind an den Rändern der Kippmulde oder an der Außenseite der Kippmulde angeschweißt Zwei Verstärkungsschienen sind zudem als Verbindungselement für zwei kreisabschnittsförmige Seitenmodule mit einem kreisabschnittsförmigen Bodenmodul vorgesehen, derart, dass jeweils an einer Längsseite der Verstärkungsschiene eine Längskante eines Seitenmoduls und an der anderen Längsseite der Verstärkungsschiene eine Längskante des Bodenmoduls angeschweißt ist.

Bei den aus dem Stand der Technik bekannten Kippmulden tritt jedoch das Problem auf, dass insbesondere bei Verwendung von Materialien mit unterschiedlichen Materialeigenschaften für die einzelnen Wandmodule erhebliche mechanische Spannungen auftreten können, welche ggf. einen über das tolerierbare Maß hinausgehenden Materialverzug mit sich bringen können.

DARSTELLUNG DER ERFINDUNG

Im Hinblick auf die im Stand der Technik auftretenden Probleme ist es Aufgabe der vorliegenden Erfindung, eine modular aufgebaute Kippmulde der gattungsgemäßen Art bereitzustellen, bei welcher das Problem des Auftretens kritischer Materialspannungen aufgrund unterschiedlichen Materialverhaltens der Wandmodule weitestgehend überwunden ist.

Diese Aufgabe bzw. dieses technische Problem wird gemäß der vorliegenden Erfindung gelöst durch eine erfindungsgemäße Kippmulde mit den Merkmalen des Anspruchs 1.

Diese Kippmulde für ein Transportfahrzeug, umfasst einen modulartig aufgebauten und aus mindestens drei longitudinalen Modulkomponenten zusammengesetzten (vorzugsweise selbsttragenden) Kippmuldenkörper mit: einer im Wesentlichen U-förmigen oder halbkreisförmigen Querschnittsform; zwei im Querschnitt im Wesentlichen spiegelbildlich ausgebildeten, langgestreckten, plattenförmigen Seitenwandmodulen, die ein Seitenwandmodulpaar bilden und eine erste und zweite Modulkomponente darstellen und jeweils einen unteren Längsrand besitzen; und mindestens einem (vorzugsweise einem einzelnen) langgestreckten, plattenförmigen und bei Betrachtung im Querschnitt vorzugsweise rinnenartigen Bodenmodul, das eine dritte Modulkomponente darstellt und zwei obere Längsränder besitzt, die jeweils einem unteren Längsrand eines Seitenwandmoduls zugeordnet sind; wobei das Bodenmodul im Bereich seiner oberen Längsränder über eine Vielzahl von im Wesentlichen punktuellen Kaltfügestellen mit den unteren Längsrändern der Seitenwandmodule verbunden ist, wobei sich hierbei die Längsränder überlappen, und wobei die Kaltfügestellen mit einer in einem Bereich einander überlappender Randabschnitte von einander zugeordneten Längsrändern der Module als Verbindungsbereich zwischen dem Bodenmodul und dem Seitenwandmodul angeordneten Längsverschiebungsausgleichseinrichtung zusammenwirken, welche eine durch ein unterschiedliches thermisches Längenausdehnungsverhalten der Seitenwandmodule und des Bodenmoduls verursachte gegenseitige Längsverschiebung der einander zugeordneten Randabschnitte zulässt.

Die Erfinder des vorliegenden Anmeldungsgegenstandes haben erkannt, dass bei Verbindungen von Kippmuldenmodulen, welche aus Materialien mit unterschiedlichen Materialeigenschaften hergestellt sind, technische Probleme auftreten können, welche insbesondere aus einem unterschiedlichen Wärmen- bzw. thermisch bedingten Längenausdehnungsverhalten der Materialien resultieren. Diese unterschiedlichen Wärmebzw. Längenausdehnungsverhalten und daraus resultierende erhebliche Spannungen können gemäß der Erfindung durch geeignete Kaltfügestellen kompensiert werden, wie weiter unten noch genauer erläutert werden wird.

Sofern das Bodenmodul als eine im Wesentlichen ebene Plattenstruktur ausgestaltet ist, was im Rahmen des Erfindungsgedankens durchaus möglich ist, sind die Seitenlängsränder dieser Plattenstruktur als die "zwei oberen Längsränder" des Bodenmoduls zu verstehen.

Die Kippmulde ist zweckmäßigerweise an ihrer Vorderseite durch eine Vorderwand verschlossen. Ihre Rückseite ist vorzugsweise als Schüttöffnung ausgestaltet und kann eine hochgezogene Schütte oder eine verriegelbare Heckklappe oder Tür aufweisen, die nachfolgend kurz als Rückwand bezeichnet wird.

Sowohl die Seitenwandmodule als auch das Bodenmodul des Kippmuldenkörpers können, als Einzelteile betrachtet, z.B. als geschweißte Kantblechkonstruktionen oder aber auch als aus zusammengesetzten und verschweißten Strangpressprofilen (mit oder ohne Art Nut-/Federsystem) geformte Teilsegmente ausgebildet sein. Die Seitenwandmodule sind aus Gewichtsgründen sowie im Hinblick auf eine niedrige Schwerpunktslage vorzugsweise Aluminiumkonstruktionen mit einem oder mehreren integrierten Trägern im Bereich der Kippmuldenoberkante. Das Bodenmodul kann je nach Einsatzzweck aus Aluminium, Stahl, rostfreien Stahl oder auch anderen Materialien und Materialkombinationen hergestellt sein.

Unter "Kaltfügestellen" sind.im Sinne der Erfindung zum Beispiel Schraub-, Niet-, Bolzen-, Steck-, Schiebe-, Press- oder Falzverbindungen und dergleichen sowie Kombinationen daraus zu verstehen. Teilbereiche dieser Verbindungen bzw. deren Verbindungselemente können jedoch durchaus mit Heißfügestellen" (z.B. Schweißverbindungen) an oder in einem Längsrand fixiert oder vorfixiert sein. Die Verbindung der Seitenwandmodule und des Bodenmoduls untereinander erfolgt jedoch im Wesentlichen ausschließlich mittels der besagten Kaltfügetechnik. Die Vorderwand und/oder die Rückwand wiederum können entweder ebenfalls mit Kaltfügestellen und/oder Heißfügestellen an den Seitenwandmodulen und/oder dem Bodenmodul befestigt sein.

Die erfindungsgemäße Kippmulde kann im Vergleich zu bisher bekannten konventionellen Kippmulden insbesondere bei kleineren Fertigungsserien bzw. variierenden Bauausführungen rationeller und technisch einfacher hergestellt werden, da als Hauptbestandteile lediglich drei vorgefertigte longitudinale Modulkomponenten vorhanden sind, die bezogen auf ihre Längsorientierung nur an zwei einander zugeordneten Bereichen zusammenzufügen sind. Es kann somit nicht nur ein hoher Vorfertigungsgrad, sondern auch eine vereinfachte und rasch durchführbare Montage der Kippmulde realisiert werden.

Die Erfinder des vorliegenden Anmeldungsgegenstandes haben zudem erkannt, dass bei Kippmuldenkonstruktionen die (oberen) Seitenwandbereiche der Kippmulde selbst bei unterschiedlichen Kippmuldenausführungen zumeist nahezu identisch geformt bzw. aufgebaut sind, während die Form, Größe und der Aufbau des Bodenbereiches oftmals erheblich variiert, und an den Bodenbereich im Vergleich zu den Seitenbereichen zumeist auch noch Zusatzanforderung hinsichtlich der Festigkeit, Haltbarkeit usw. gestellt werden. Aufgrund der erfindungsgemäßen "Dreiteilung" der Kippmulde in die besagten drei longitudinalen Modulkomponenten ist es nun aber möglich, bzw. für die meisten unterschiedlichen Anwendung gänzlich ausreichend, lediglich eine einzelne baugleiche Art von Seitenwandmodulpaaren bereitzustellen, die dann mit unterschiedlichsten Arten von Bodenmodulen, die für unterschiedlichste Einsatzzwecke konzipiert sind, kombiniert wird.

Dies gestattet unter Beibehaltung der oben geschilderten Vorteile einer einfachen und effektiven Montage nicht nur eine enorm gesteigerte Flexibilität bei der Herstellung von Kippmulden für unterschiedlichste Anwendungszwecke, sondern schafft auch eine erhebliche fertigungstechnische Vereinfachung, Erleichterung, Rationalisierung und finanzielle Einsparung, was sich besonders bei Kleinserien oder der Einzelfertigung positiv auswirkt.

Es sei an dieser Stelle ausdrücklich erwähnt, dass das erfindungsgemäße Konzept natürlich auch noch mit mehr (zweckmäßigerweise jedoch nicht zu viel mehr) als drei longitudinalen Modulkomponenten in einem vertretbaren Aufwand realisierbare wäre (z.B. mit vier, fünf oder ggf. auch sechs Modulkomponenten), jedoch sind in den meisten Fällen die drei Modulkomponenten, wie bereits erwähnt, gänzlich ausreichend und vorteilhaft. Auch bezüglich der Bereitstellung der besagten einzelnen baugleichen Art von Seitenwandmodulpaaren ist in analoger Anwendung des zuvor Gesagten natürlich generell auch die Bereitstellung (weniger) weiterer Arten denkbar. Erstaunlicherweise hat es sich jedoch gezeigt, dass dies bei den meisten Kippmuldenkonstruktionen gar nicht erforderlich ist.

Durch die erfindungsgemäßen Kaltfügestellen im Bereich der oberen Längsränder des Bodenmoduls und der unteren Längsränder der Seitenwandmodule kann nicht nur eine einfach und effektiv zu realisierende Verbindung zwischen diesen Modulteilen erzielt werden, sondern es lassen sich auch aus unterschiedlichsten Materialien hergestellte Module, die zum Beispiel nicht untereinander verschweißbar sind, zuverlässig miteinander verbinden. Dies wiederum gestattet es, zum Beispiel das gesamte Bodenmodul direkt aus einem sehr verschleißfesten und/oder schlagfesten Material (z.B. einem Stahl) herzustellen und mit den Seitenwandmodulen, die beispielsweise aus einem Leichtmetall wie Aluminium hergestellt sind, zu verbinden, ohne dass es wie beim Stand der Technik erforderlich ist, das Bodenmodul mit einem solchen Material aufzudoppeln. Auf die Aufdoppelung kann also verzichtet werden.

Dies führt nicht nur zu einer erheblichen Gewichtseinsparung und einem Nutzlastgewinn, sondern vermeidet auch die vom Stand der Technik bekannten Abrasions - und Korrosionsprobleme im Bereich des Kippmuldenbodens. Die erfindungsgemäße Kippmulde ist aufgrund der zuvor genannten Konstruktionsweise daher auch besonders einfach und effektiv für den Transport von abrasiven oder scharf- oder spitzkantigen Schüttgütern auszubilden. Darüber hinaus sind für die erfindungsgemäße Kippmulde, welche diese Vorteile ermöglicht, keine komplizierten oder aufwendigen Herstellungstechniken erforderlich.

Weitere bevorzugte und vorteilhafte Ausgestaltungsmerkmale der erfindungs-gemäßen Kippmulde sind Gegenstand der Unteransprüche 2 bis 12.

Zur Herstellung von Kippmulden für ein Transportfahrzeug wird das folgende Verfahren angegeben, welches folgende Schritte, jedoch nicht zwingenderweise in der gegebenen Reihenfolge, umfasst:

Bereitstellen von im Wesentlichen baugleichen vorgefertigten Seitenwandmodulpaaren, die jeweils zwei im Querschnitt im Wesentlichen spiegelbildlich ausgebildete, langgestreckte, plattenförmige Seitenwandmodule aufweisen, die eine erste und zweite longitudinale Modulkomponente darstellen und jeweils einen unteren Längsrand besitzen;
Bereitstellen von mindestens zwei unterschiedlichen Arten von vorgefertigten langgestreckten, plattenförmigen Bodenmodulen, die jeweils eine dritte longitudinale Modulkomponente darstellen und jeweils zwei obere Längsränder besitzen;
Auswählen eines Bodenmoduls aus den mindestens zwei unterschiedlichen Arten von Bodenmodulen entsprechend einem für die anzufertigende Kippmulde vorbestimmten Anforderungsprofil;
Zusammensetzen des ausgewählten Bodenmoduls mit einem der baugleichen Seitenwandmodulpaare zu einem Kippmuldenkörper mit einer im Wesentlichen U-förmigen oder halbkreisförmigen Querschnittsform derart, dass die zwei oberen Längsränder des Bodenmoduls jeweils einem unteren Längsrand eines Seitenwandmoduls zugeordnet sind; und
Verbinden des Bodenmoduls im Bereich seiner oberen Längsränder mit den unteren Längsrändern der Seitenwandmodule über Kaltfügestellen, vorzugsweise über eine Vielzahl von im Wesentlichen punktuellen Kaltfügestellen.

"Baugleiche" Seitenwandmodulpaare bedeutet hier, dass die jeweiligen Seitenwandmodulpaare hinsichtlich ihrer Materialeigenschaften, ihrer Ausgestaltung, Baugröße, Abmessung und Form im Wesentlichen gleich, gleichartig oder sogar identisch sind. "Unterschiedliche Arten" von Bodenmodulen bedeutet im Sinne dieser Beschreibung, dass sich diese Bodenmodule hinsichtlich ihrer Ausgestaltung, Baugröße, Abmessung, Form und Materialeigenschaften voneinander unterscheiden und/oder, dass diese Bodenmodule für unterschiedliche Einsatz- bzw. Anwendungszwecke vorgesehen sind.

Das Anforderungsprofil, nach dem ein jeweiliges Bodenmodul aus den mindestens zwei unterschiedlichen Arten von Bodenmodulen ausgewählt wird, umfasst vorzugsweise einen gewünschten Einsatz- bzw. Anwendungszweck der Kippmulde und insbesondere eine auf den jeweiligen Einsatz- bzw. Anwendungszweck abgestimmte Abriebfestigkeit und/oder Korrosionsbeständigkeit und/oder Schlagfestigkeit und/oder einen gewünschten Reibungskoeffizienten und/oder Längenausdehnungskoeffizienten und/oder Wärmeausdehnungskoeffizienten und/oder das Gewicht des Materials des Bodenmoduls.

Das beschriebene Verfahren bietet im Wesentlichen die gleichen Vorteile, wie sie bereits weiter oben im Zusammenhang mit der erfindungsgemäßen Kippmulde erläutert wurden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

## KURZE BESCHREIBUNG DER ZEICHNUNGEN

Es zeigt:

Fig. 1      eine schematische Seitenansicht eines mit einer erfindungsgemäßen Kippmulde ausgestatteten Transportfahrzeugs;

Fig. 2      eine schematische Querschnittsansicht einer symmetrischen Hälfte des Kippmuldenkörpers der erfindungsgemäßen Kippmulde entlang der Linie II-II von Fig. 1;

Fig. 3      eine vergrößerte schematische Querschnittsansicht einer Kaltfügestelle des erfindungsgemäßen Kippmuldenkörpers im Bereich des Kreises Y von Fig. 2 gemäß einer ersten Ausführungsform;

Fig. 4      eine vergrößerte schematische Querschnittsansicht einer Kaltfügestelle des erfindungsgemäßen Kippmuldenkörpers im Bereich des Kreises Y von Fig. 2 gemäß einer zweiten Ausführungsform;

Fig. 5      eine schematische Seitenansicht der Kaltfügestelle von Fig. 4 in Blickrichtung des Pfeils X in Fig. 4;

Fig. 6      eine vergrößerte schematische Querschnittsansicht einer Kaltfügestelle des erfindungsgemäßen Kippmuldenkörpers im Bereich des Kreises Y von Fig. 2 gemäß einer dritten Ausführungsform;

Fig. 7    eine vergrößerte schematische Querschnittsansicht einer Kaltfügestelle des erfindungsgemäßen Kippmuldenkörpers im Bereich des Kreises Y von Fig. 2 gemäß einer vierten Ausführungsform; und

Fig. 8    eine vergrößerte schematische Querschnittsansicht einer Kaltfügestelle des erfindungsgemäßen Kippmuldenkörpers im Bereich des Kreises Y von Fig. 2 gemäß einer fünften Ausführungsform.

## DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

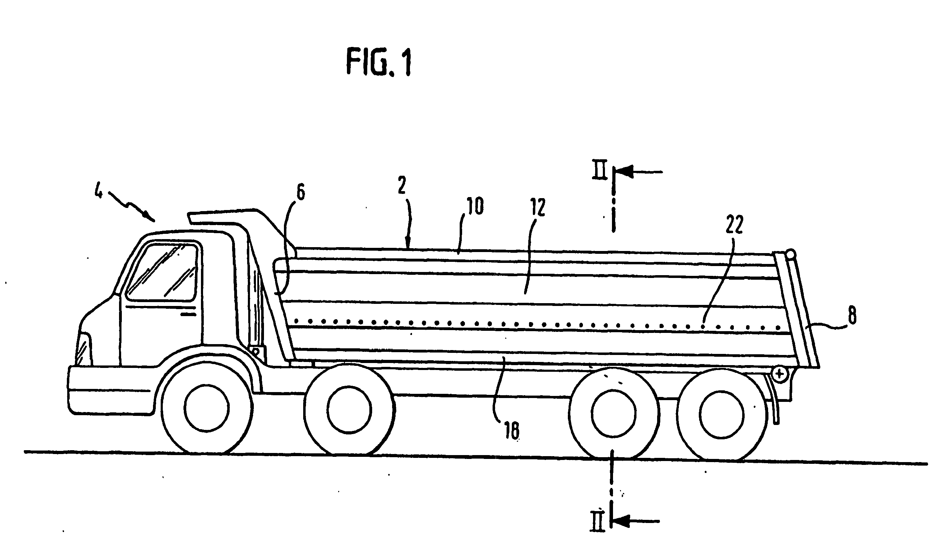

Die Fig. 1 zeigt eine schematische Seitenansicht eines Ausführungsbeispiels einer erfindungsgemäßen Kippmulde 2, die im vorliegenden Fall auf einem Fahrgestellrahmen eines als Straßennutzfahrzeug ausgestalteten Transportfahrzeugs 4 angeordnet ist. Die für die Aufnahme von schüttfähigem Transportgut ausgelegte Kippmulde 2 umfasst eine Vorderwand 6, eine rückwärtige Entladeöffnung, die durch eine Klappe 8 verschließbar ist, sowie einen sich zwischen der Vorderwand 6 und der Entladeöffnung erstreckenden halbschalenartigen Kippmuldenkörper 10 mit einem symmetrischen und im wesentlichen U-förmigen oder halbkreisförmigen Querschnitt. Dieser selbsttragende Kippmuldenkörper ist im vorliegenden Beispiel querträgerlos ausgebildet.

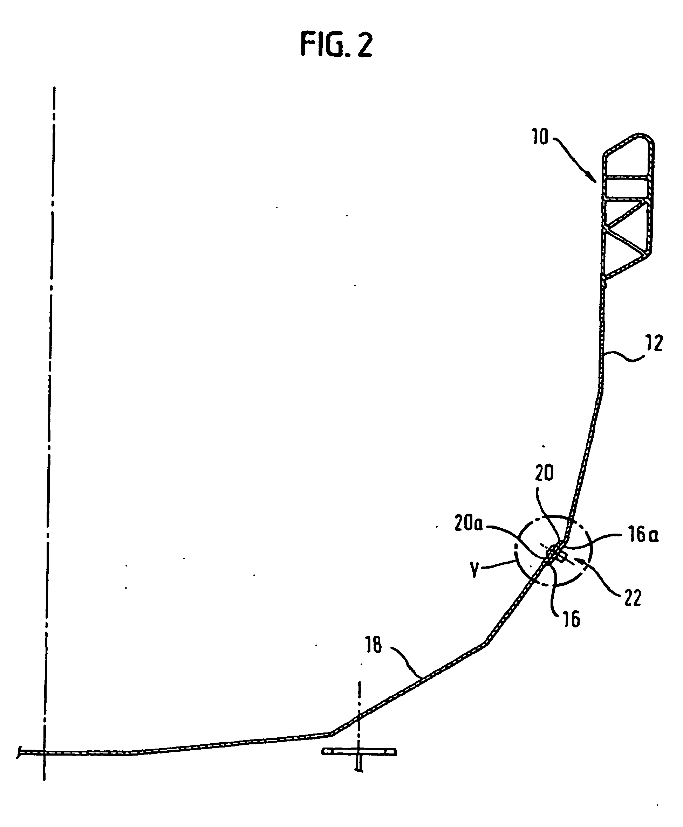

In der Fig. 2, welche eine schematische Querschnittsansicht einer symmetrischen (rechten) Hälfte des Kippmuldenkörpers 10 der erfindungsgemäßen Kippmulde 2 entlang der Linie II-II von Fig. 1 darstellt, sind weitere Details der Kippmuldenkörperkonstruktion erkennbar.

Wie aus dieser Zeichnung zu ersehen, ist der Kippmuldenkörper 10 hier im Wesentlichen aus drei longitudinalen, d.h. sich in Längsrichtung der Kippmulde 2 erstreckenden Modulkomponenten 12, 18 zusammengesetzt. Die erste und zweite Modulkomponente 12 wird von zwei im Querschnitt im Wesentlichen spiegelbildlich geformten, langgestreckten plattenförmigen Seitenwandmodulen 12 gebildet, die ein Seitenwandmodulpaar darstellen. Jedes der Seitenwandmodule 12 besitzt einen mit dem Bezugszeichen 16 gekennzeichneten unteren Längsrand. Bei der dritten Modulkomponente 18 handelt es sich um ein langgestrecktes, plattenförmiges Bodenmodul 18, das bei Betrachtung im Querschnitt eine rinnenartige Form aufweist.

Die Seitenwandmodule 12 sind im vorliegenden Ausführungsbeispiel aus einer Vielzahl von sich im wesentlichen parallel zur Fahrzeuglängsachse erstreckenden, längslaufenden und teilweise unterschiedlich ausgestalteten, zusammengeschweißten Strangpreßprofilen aus Aluminium vorgefertigt. Das Bodenmodul 18 hingegen ist hier aus einem oder mehreren verschweißten Kantblechen aus Stahl vorgefertigt (grundsätzlich könnte das Bodenmodul 18 natürlich aus dem gleichen Material wie die Seitenwandmodule 12 hergestellt sein).

Das Bodenmodul 18 und die Seitenwandmodule 12 sind also aus unterschiedlichen Materialien mit unterschiedlichen Materialeigenschaften hergestellt. Und das Material des Bodenmoduls 18 besitzt Materialeigenschaften, die ausgewählt sind aus einer Gruppe von Materialeigenschaften, umfassend: eine höhere Abriebfestigkeit als das Material der Seitenwandelemente 12; eine höhere Schlagfestigkeit als das Material der Seitenwandelemente 12; einen niedrigeren Reibungskoeffizienten als das Material der Seitenwandelemente 12; einen anderen Längenausdehnungskoeffizienten als das Material der Seitenwandelemente 12 bzw. einen anderen Wärmeausdehnungskoeffizienten als das Material der Seitenwandelemente 12.

Das Bodenmodul 18 verfügt entsprechend der Darstellung von Fig. 2 über zwei obere Längsränder 20, die jeweils einem unteren Längsrand 16 des Seitenwandmoduls 12 zugeordnet sind. In der Fig. 2 ist nur der rechte der oberen Längsränder 20 zu erkennen. Das Bodenmodul 18 ist im Bereich seiner oberen Längsränder 20 über Kaltfügestellen 22 mit den unteren Längsrändern 16 der Seitenwandmodule 12 verbunden. Wie in der Fig. 2 deutlich zu erkennen ist, überlappen sich die einander zugeordneten Längsränder 16, 20 der Module 12, 18 mit ihren Randabschnitten 16a, 20a, und die Kaltfügestellen 22 sind im Bereich der überlappenden Randabschnitte 16a, 20a angeordnet. Diese Kaltfügestellen 22 sind im gegebenen Ausführungsbeispiel als eine Vielzahl von im Wesentlichen punktuellen und in Längsrichtung der Kippmulde 2 gleichmäßig oder ungleichmäßig voneinander beabstandeten Kaltfügestellen 22 ausgestaltet (siehe auch schematische Darstellung in Fig. 1). Der Verbindungsbereich bzw. dessen Umgebung ist in der Fig. 2 mit einem Kreis Y angedeutet. Auf die Einzelheiten der Kaltfügestellen 22 wird nachfolgend noch genauer eingegangen werden.

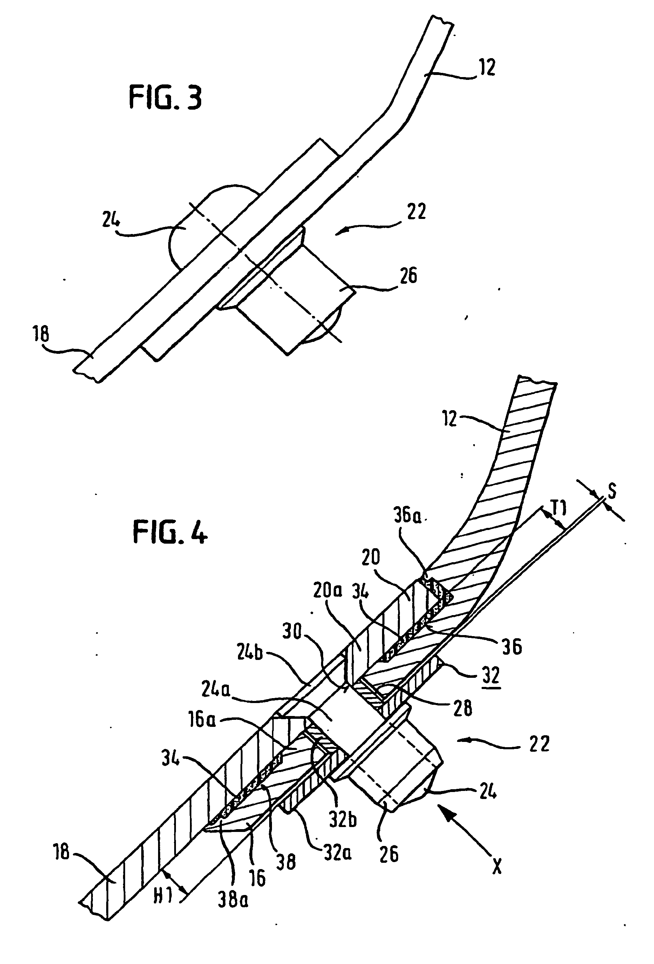

Fig. 3 zeigt basierend auf der in den Fig. 1 und 2 dargestellten Grundkonstruktion der erfindungsgemäßen Kippmulde 2 eine vergrößerte schematische Querschnittsansicht einer einzelnen Kaltfügestelle 22 des erfindungsgemäßen Kippmuldenkörpers 10 im Bereich des Kreises Y von Fig. 2 gemäß einer ersten Ausführungsform. Diese Kaltfügestelle 22 ist im vorliegenden Fall als Festverbindung in Form einer Schließringbolzen-Verbindung 24, 26 ausgeführt. Mit dieser Festverbindung werden Seitenwandmodule 12 und ein Bodenmodul 18 verbunden, die aus Materialien mit unterschiedlichen Materialeigenschaften hergestellt sind.

Für erfindungsgemäße Kippmulden, die, wie oben geschildert, mit Seitenwandmodulen 12 und einem Bodenmodul 18 ausgestattet sind, welche über unterschiedliche Materialeigenschaften verfügen, werden ferner bevorzugt Kaltfügestellen 22 verwendet, welche mit einer im Bereich der überlappenden Randabschnitte 16a, 20a angeordneten Längsverschiebungsausgleichseinrichtung zusammenwirken, welche eine durch ein unterschiedliches thermisches Längenausdehnungsverhalten der Seitenwandmodule 12 und des Bodenmoduls 18 verursachte gegenseitige Längsverschiebung der einander überlappenden Randabschnitte 16a, 20a um einen vorbestimmten Betrag zulässt.

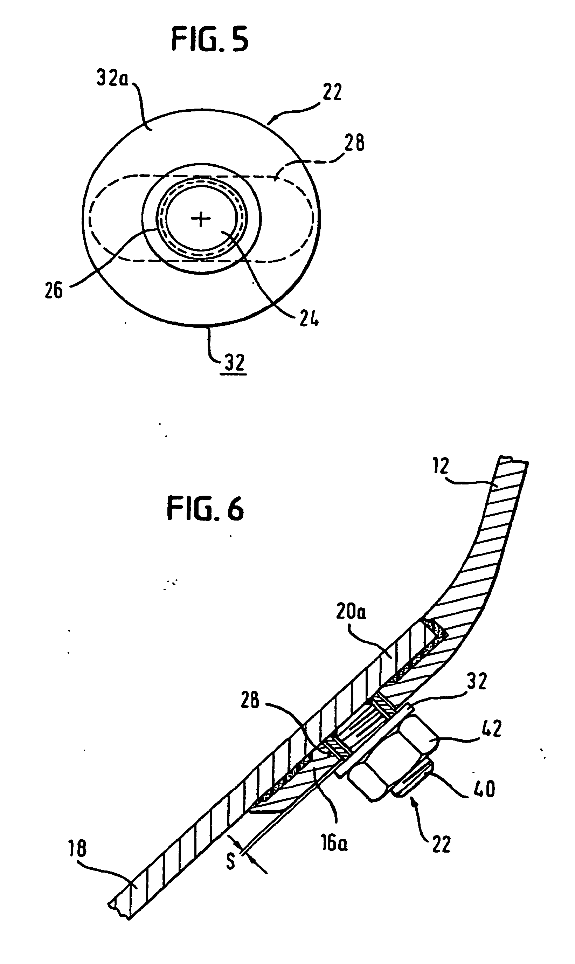

Der Fig. 4, welche eine vergrößerte schematische Querschnittsansicht einer Kaltfügestelle 22 des erfindungsgemäßen Kippmuldenkörpers 10 im Bereich des Kreises Y von Fig. 2 gemäß einer zweiten Ausführungsform darstellt, ist ein Beispiel einer derartigen Kaltfügestelle 22 zu entnehmen. Fig. 5 zeigt eine schematische Seitenansicht der Kaltfügestelle 22 von Fig. 4 in Blickrichtung des Pfeils X in Fig. 4.

Wie in diesen Zeichnungen erkennbar, umfasst die Kaltfügestelle 22 ein Befestigungselement (hier: einen Schließringbolzen 24 und einen Schließring 26), und die Längsverschiebungsausgleichseinrichtung umfasst ein sich in Längsrichtung der Kippmulde 2 erstreckendes Langloch 28, welches im vorliegenden Ausführungsbeispiel im unteren Randabschnitt 16a des Seitenwandmoduls 12 vorgesehen ist, der sich mit dem oberen Randabschnitt 20a des Bodenmoduls 18 überlappt. Der stiftförmige Bolzenkörper 24a des Schließringbolzens 24 ist durch eine im oberen Randabschnitt 20a des Bodenmoduls 18 vorgesehene Bohrung 30 gesteckt und mit seinem in der Fig. 4 auf der linken Seite befindlichen Kopf 24b in einem Senkloch des Randabschnitts 20a gehalten.

Des Weiteren erstreckt sich der Schließringbolzen 24 durch das Langloch 28 hindurch und ist auf der in Fig. 4 rechten Seite des unteren Randabschnitts 16a des Seitenwandmoduls 12 mittels des Schließrings 26 (als Sicherungselement) derart gesichert, dass die Schließringbolzen-Verbindung 24, 26 die einander überliegenden Randabschnitte 16a, 20a im Wesentlichen senkrecht zu deren Plattenebenen fest zusammenhält, gleichzeitig aber die Randabschnitte 16a, 20a und damit die Module 12, 18 um einen vorbestimmten Betrag gegeneinander längsverschiebbar verbindet. In Richtung der Plattenebenen und senkrecht zur Längsrichtung der Module 12, 18 hingegen hält die Schließringbolzen-Verbindung 24, 26 die Module 12, 18 im Wesentlichen fest und spielfrei zusammen.

Anstelle eines Langloches 28, das nur in einem der Randabschnitte 16a, 20a (hier: der Randabschnitt 16a des Seitenwandmoduls 12) vorgesehen ist, kann, zusätzlich oder alternativ dazu natürlich auch ein in dem Randabschnitt 20a des Bodenmoduls 18 befindliches Langloch vorgesehen sein. Der Schließringbolzen 24 bzw. das betreffende Befestigungselement erstreckt sich bei zwei Langlöchern dann durch die beiden, von den Langlöchern gebildeten Durchgangsöffnungen hindurch.

Wie in der Fig. 4 des Weiteren erkennbar, ist zwischen dem Schließring 26 und einer dem Schließring 26 zugewandten Seite des Randabschnittes 16a des Seitenwandmoduls 12 ein Distanzstück 32 angeordnet. Das Distanzstück 32 besitzt einen scheibenförmigen Abschnitt 32a sowie einen sich daran anschließenden ringförmigen Abschnitt 32b mit der Höhe H1. Der ringförmige Abschnitt 32b umschließt den Bolzenkörper 24a des Schließringbolzens 24 und erstreckt sich durch das Langloch 28 hindurch bis an den in der Fig. 4 rechten Wandbereich des oberen Randabschnittes 20a des Bodenmoduls 18. Die Höhe H1 des ringförmigen Abschnittes 32b, gemessen von der in der Fig. 4 rechten Seite des oberen Randabschnittes 20a bis zur linken Seite, d.h. dem Ansatz des scheibenförmigen Abschnittes 32a, bestimmt hierbei in Verbindung mit der Plattendicke T1 des Randabschnittes 16a des Seitenwandmoduls 12 das besagte vorbestimmte Spiel S. Auch der Außendurchmesser des ringförmigen Abschnitts 32b ist so gewählt, dass der ringförmige Abschnitt 32b bezogen auf die geringste Breite des Langlochs 28 mit Spiel in das Langloch 28 passt.

Der scheibenförmige Abschnitt 32a, dessen Durchmesser zumindest größer als die geringste Breite des Langloches 28 ist, stellt in Zusammenwirkung mit dem Schließring 26 des Schließringbolzens 24 eine formschlüssige Verbindung zwischen den Randabschnitten 16a, 20a des Bodenmoduls 18 und des Seitenwandmoduls 12 her. Aufgrund dieser Ausgestaltungsweise, insbesondere aufgrund des vorbestimmten Spiels S können sich die aus unterschiedlichen Materialien hergestellten Module 12, 18 bei einer unterschiedlichen Wärmeausdehnung bzw. einer thermisch bedingten unterschiedlichen Längenausdehnung in Längsrichtung der Kippmulde 2 gegeneinander verschieben und werden dennoch an ihren überlappenden Randabschnitten 16a, 20a mit dem vorbestimmten Spiel S in der Art einer Losverbindung sicher zusammengehalten.

Wie aus der Fig. 4 des Weiteren ersichtlich, ist an einem Teilabschnitt der überlappenden Randabschnitte 16a, 20a eine Dichtung 34, d. h. im vorliegenden Falle eine Flüssigkeitsdichtung, zwischen den überlappenden Randabschnitten 16a, 20a angeordnet. Diese Dichtung 34 dichtet die einander zugeordneten Längsränder 16, 20 der einander anliegenden Randabschnitte 16a, 20a des Seitenwandmoduls 12 und des Bodenmoduls 18 über im Wesentlichen deren gesamte Länge durchgehend gegeneinander ab. Die Dichtung 34 bildet im vorliegenden Ausführungsbeispiel gleichzeitig eine zwischen den überlappenden Randabschnitten 16a, 20a angeordnete Isolierungsschicht aus, welche die voneinander unterschiedlichen Materialien (Aluminium und Stahl) des Bodenmoduls 18 und des Seitenwandmoduls 12 elektrolytisch voneinander isoliert.

In der Ausführungsform gemäß Fig. 4 und 5 ist die Dichtung/Flüssigkeitsdichtung 34 bzw. die dadurch gebildete Isolierungsschicht in zwei hohlkehlenartige Vertiefungen 36, 38 eingefügt, welche sich im Randbereich 16a des Seitenwandmoduls 12 oberhalb und unterhalb des Langloches 28 bzw. der Kaltfügestelle 22 über im Wesentlichen die gesamte Länge des Bodenmoduls 18 und des Seitenwandmoduls 12 erstrecken. Alternativ oder ergänzend dazu könnten die betreffenden hohlkehlenartigen Vertiefungen 36, 38 natürlich auch in einem Randbereich des Bodenmoduls 18 vorgesehen sein. Wie in der Fig. 4 deutlich erkennbar, ist die obere hohlkehlenartige Vertiefung 36 um die Oberkante des oberen Randabschnittes 20a des Bodenmoduls 18 herumgezogen, so dass sich bei Betrachtung im Querschnitt eine L-Form der besagten Vertiefung 36 ergibt.

Im überlappten Zustand der Randabschnitte 16a, 20a bilden die hohlkehlenartigen Vertiefungen 36, 38 gewissermaßen Dichtungstaschen aus. Im Bereich des abgewinkelten Schenkels der L-förmigen oberen Vertiefung 36 ist auf der zum Innenraum der Kippmulde 2 weisenden Seite eine Nase 36a ausgebildet, welche die in die hohlkehlenartige Vertiefung 36 eingefügte Dichtung 34 im noch nicht montierten Zustand der Module 12, 18 sichert und im montierten Zustand der Module 12, 18 eine zusätzliche Abdichtungswirkung erzielt. Aus ähnlichen Gründen ist an der in der Fig. 4 unteren hohlkehlenartigen Vertiefung 38 eine Abstufung 38a ausgebildet, wobei die Abstufung 38a geringfügig über einen Teilbereich der Flüssigkeitsdichtung 34 greift.

Die Flüssigkeitsdichtung 34 ist vorzugsweise ein vorgefertigtes gummielastisches Element, welches vor der Montage in die jeweilige hohlkehlenartige Vertiefung 36, 38 eingelegt und dort gegebenenfalls, wie bereits erwähnt, gesichert wird. Als Flüssigkeitsdichtung kann jedoch auch ein flüssiges, pastöses und/oder aushärtbares Dichtungs- und/oder Haftmittel bzw. Klebemittel verwendet werden. Bevorzugt ist die Dichtung/Flüssigkeitsdichtung 34 in demjenigen Modul angeordnet, welches im Vergleich zu dem jeweils anderem Modul den größeren Wärme- bzw. Längenausdehnungskoeffizienten besitzt (hier: das jeweilige Aluminium-Seitenwandmodul 12).

Zusätzlich sind das Langloch 28 und/oder die im vorliegenden Fall für den Schließringbolzen 24 vorgesehene Bohrung 30 um den hindurch gesteckten Schließringbolzen 24 herum mit einem gummielastischen Material (nicht dargestellt) oder einem vergleichbaren Dichtungsmaterial, wie z.B. einer Dichtungspaste, einem Haftmittel oder dergleichen ausgefüllt. Dies gewährleistet trotz der besagten Längsbeweglichkeit der Module 12, 18 eine zuverlässige Dichtungswirkung im Bereich des Langlochs 28 bzw. der Bohrung 30.

Fig. 6 zeigt eine vergrößerte schematische Querschnittsansicht einer Kaltfügestelle 22 des erfindungsgemäßen Kippmuldenkörpers 10 im Bereich des Kreises Y von Fig. 2 gemäß einer dritten Ausführungsform. Diese Variante ähnelt im Wesentlichen der Ausführungsform von Fig. 4 und 5, d.h. sie ist als Losverbindung ausgeführt. Jedoch werden als Befestigungselemente ein Gewindebolzen 40 und eine Mutter 42 verwendet. Der Gewindebolzen 40 ist mit seinem einen Ende auf den Randabschnitt 20a des Bodenmoduls 18 aufgeschweißt. Die Anordnung und die Konstruktionsweise des Distanzstückes 32 entspricht im Wesentlichen der Fig. 4 und 5.

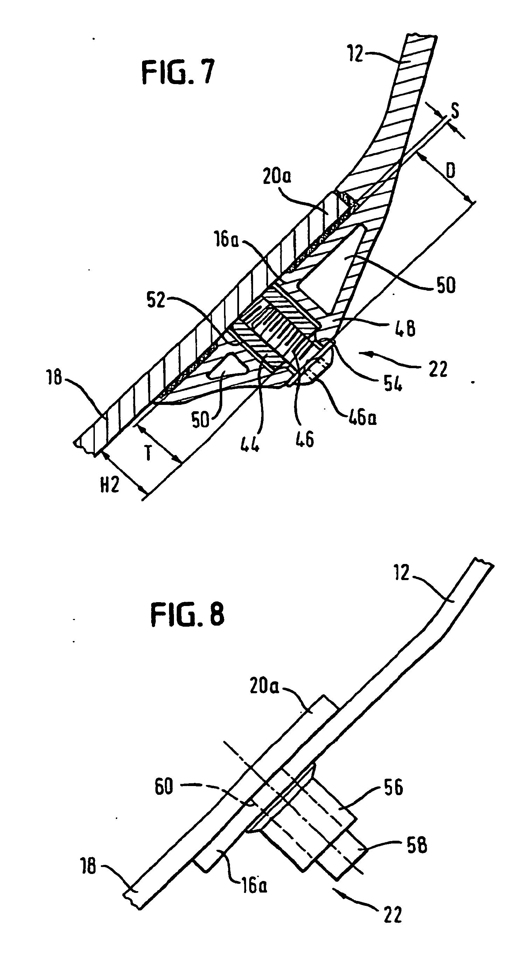

Fig. 7 zeigt eine vergrößerte schematische Querschnittsansicht einer Kaltfügestelle 22 des erfindungsgemäßen Kippmuldenkörpers 10 im Bereich des Kreises Y von Fig. 2 gemäß einer vierten Ausführungsform. Auch diese Variante ähnelt von ihrem Grundprinzip her denen von Fig. 4, 5 und 6. Als Befestigungselemente werden im vorliegenden Fall jedoch eine Gewindebuchse 44 und eine Schraube 46 verwendet. Die Gewindebuchse 44 ist auf den oberen Randabschnitt 20a des Bodenmoduls 18 aufgeschweißt. Wie in der Fig. 7 dargestellt, verfügt der untere Randabschnitt 16a des Seitenwandmoduls 12 über einen verdickten Bereich 48, der Hohlkammern 50 aufweist.

Die senkrecht zur Plattenebene des oberen Randabschnittes 20a des Bodenmoduls gemessene Dicke D des verdickten Bereiches 48 ist größer als die Höhe H2 der Gewindebuchse 44. Die Gewindebuchse 44 greift mit radialem und axialem Spiel in eine nutenförmige Aussparung 52 ein, die in dem verdickten Bereich 48 geformt ist. Wenn das Seitenwandmodul 12, wie im vorliegenden Beispiel aus Strangpressprofilen aufgebaut ist, erstreckt sich diese Nut 52 vorzugsweise über im Wesentlichen die gesamte Länge des Kippmuldenkörpers 10. Die Nut 52 fungiert gewissermaßen als Langloch.

Aus der Fig. 7 geht ferner hervor, dass in dem verdickten Bereich 48 eine Durchgangsbohrung 54 vorgesehen ist, durch welche die Schraube 46 hindurch gesteckt und in das Gewinde der Gewindebuchse 44 eingedreht und festgezogen ist. Die Schraube 46 besitzt einen Schraubenkopf 46a, dessen Durchmesser größer als der Durchmesser der in dem verdickten Bereich 48 befindlichen Durchgangsbohrung 54 ist. Durch Festziehen der Schraube 46 können die Randabschnitte 16a, 20a des Bodenmoduls 18 und des Seitenwandmoduls 12 sicher aber längenverschiebbar miteinander verbunden werden. Die Höhe H2 der Gewindebuchse 44 bestimmt hierbei in Zusammenwirkung mit der Tiefe T der Nut 52, wobei die Tiefe T geringfügig kleiner als die Höhe H2 ist, das vorbestimmte Spiel S.

Fig. 8 zeigt eine vergrößerte schematische Querschnittsansicht einer Kaltfügestelle 22 des erfindungsgemäßen Kippmuldenkörpers 10 im Bereich des Kreises Y von Fig. 2 gemäß einer fünften Ausführungsform.

Diese Variante ähnelt der Ausführungsform von Fig. 3 insofern, als dass die Kaltfügestelle 22 auch hier als Festverbindung ausgeführt ist. Jedoch ist die in Fig. 8 dargestellt Kaltfügestelle 22 zur Verbindung von Modulen 12, 18 aus unterschiedlichen Materialien geeignet. Im vorliegenden Fall sind die jeweiligen Seitenwandmodule 12 aus Aluminium und das Bodenmodul 18 aus Stahl hergestellt, wie bereits erwähnt. Als Befestigungselemente dienen ein Sicherungselement 56 in Form eines Schließrings und ein Schließringbolzen 58 (bzw. eine nietähnliche Verbindung mittels eines Gewindeschweißbolzens, der mit einem Schließring verpresst ist), der auf den Randabschnitt 20a des Bodenmoduls 18 aufgeschweißt und durch eine im Randabschnitt 16a des Seitenwandmoduls 12 befindliche Durchgangsbohrung 60 hindurch gesteckt und mittels des Sicherungselementes 56 gesichert ist. Wie in der Fig. 8 erkennbar, liegen die einander überlappenden, verbundenen Randabschnitte 16a, 20 spielfrei aufeinander.

Das Sicherungselement 56 ist so fest angezogen, dass die Randabschnitte 16a, 20a über den Bolzen 58 stets mit einer im Wesentlichen senkrecht zu den Plattenebenen der Randabschnitte 16a, 20a wirkenden Kraft $F_N$ zusammengehalten sind, die so gewählt ist, dass die Bedingung

$$F_L > \mu * F_N$$

erfüllt ist. Mit der o.g. Bedingung wird ebenfalls eine Art Längsverschiebungsausgleichseinrichtung realisiert. Hierbei ist $\mu$ ein aus einer Materialpaarung der einander überlappender Randabschnitte 16a, 20a resultierender Reibungskoeffizient, und $F_L$ ist eine Längskraft, die an der betreffenden Kaltfügestelle aus einer gegenseitigen Längsverschiebung der einander überlappenden Randabschnitte 16a, 20a resultiert, die durch ein unterschiedliches thermisches Längenausdehnungsverhalten des Bodenmoduls 18 und des jeweiligen Seitenwandmoduls 12 bedingt ist. Das unterschiedliche thermische Längenausdehnungsverhalten der Module 12, 18 ergibt sich bei unterschiedlichen Materialpaarungen aus den unterschiedlichen Längenausdehnungskoeffizienten bzw. Wärmeausdehnungskoeffizienten dieser Materialien.

Es wird an dieser Stelle ausdrücklich darauf hingewiesen, dass eine als Kaltfügestelle 22 ausgebildete Verbindung, welche die vorher genannten Bedingungen erfüllt, nicht zwangsweise als Schließringbolzen-Verbindung ausgeführt werden muss. Bei Verwendung geeigneter Werkzeuge und Kontrollvorrichtungen können als Befestigungselemente, welche die besagte Bedingung erfüllen, z. B. auch Nieten, Schraubverbindungen, Klammern oder dergleichen verwendet werden.

Es wird nun ein Verfahren zur Herstellung von Kippmulden für ein Transportfahrzeug beschrieben, das nicht Umfang der Erfindung ist.

Zum Zwecke der Veranschaulichung wird der Einfachheit halber angenommen, dass mit dem Verfahren zwei unterschiedliche Typen von Kippmulden produziert werden sollen.

Zunächst wird eine Vielzahl von (im Wesentlichen) baugleichen, vorgefertigten Seitenwandmodulpaaren, bereitgestellt, die jeweils zwei im Querschnitt im Wesentlichen spiegelbildlich ausgebildete, langgestreckte plattenförmige Seitenwandmodule aufweisen, die eine erste und zweite longitudinale Modulkomponente darstellen und jeweils einen unteren Längsrand besitzen. Die Seitenwandmodule sind im vorliegenden Fall aus Aluminium hergestellt.

Ferner werden mindestens zwei unterschiedliche Arten von vorgefertigten langgestreckten, plattenförmigen Bodenmodulen bereitgestellt, die jeweils eine dritte longitudinale Modulkomponente darstellen und jeweils zwei obere Längsränder besitzen. Eines der Bodenmodule ist aus Aluminium hergestellt, das andere aus Stahl. Das Aluminium-Bodenmodul besitzt im Wesentlichen die gleichen Materialeigenschaften wie die Aluminium-Seitenwandmodule.

Das Stahl-Bodenmodul hingegen besitzt gegenüber den Aluminium-Seitenwandmodulen unterschiedliche Materialeigenschaften. Das heißt, das Stahl-Bodenmodul besitzt eine höhere Abriebfestigkeit, eine höhere Schlagfestigkeit, einen niedrigeren Reibungskoeffizienten, ein anderes Korrosionsverhalten und einen anderen Wärme- bzw. Längenausdehnungskoeffizienten als die Aluminium-Seitenwandmodule. Zusätzlich können die Bodenmodule auch unterschiedliche Abmessungen aufweisen und/oder gegenüber den Seitenwandmodulen eine unterschiedliche Dicke/Materialdicke besitzen.

Die voneinander unterschiedlichen Bodenmodule sind an ihren oberen Randabschnitten jedoch stets so auf die Seitenwandmodulpaare abgestimmt, dass die Randabschnitte eines jeweiligen Bodenmoduls mit den zugeordneten Randabschnitten der Seitenwandmodulpaare immer gut zusammenpassen. Es ist also gewissermaßen eine einheitliche "Adapterstelle" oder ein einheitlicher Verbindungsbereich für die gleichartigen oder unterschiedlichen Module vorgesehen.

Zur Herstellung einer Kippmulde (Typ 1) wird nun eines der Bodenmodule aus den mindestens zwei unterschiedlichen Arten von Bodenmodulen entsprechend eines für die anzufertigende Kippmulde vorbestimmten Anforderungsprofils ausgewählt. Für das vorliegende Ausführungsbeispiel wird angenommen, dass eine Kippmulde hergestellt werden soll, die für den Transport von spitzen, scharfkantigen und abrasiven Schüttgütern geeignet ist. Aufgrund dieses Anforderungsprofils wird aus den bereitgestellten Bodenmodulen das Stahl-Bodenmodul ausgewählt.

Dann wird dieses ausgewählte Stahl-Bodenmodul mit einem der baugleichen Aluminium-Seitenwandmodulpaare zu einem Kippmuldenkörper mit einer im Wesentlichen U-förmigen oder halbkreisförmigen Querschnittsform derart zusammengesetzt, dass die zwei oberen Längsränder des Bodenmoduls jeweils einem unteren Längsrand eines Seitenwandmoduls zugeordnet sind.

Anschließend wird das Stahl-Bodenmodul im Bereich seiner oberen Längsränder mit den unteren Längsrändern der Aluminium-Seitenwandmodule über eine Vielzahl von im Wesentlichen punktuellen Kaltfügestellen verbunden.

An diese Schritte können sich Schritte zur Montage einer Vorder- und Rückwand anschließen.

Soll hingegen z. B. eine Kippmulde (Typ 2) gefertigt werden, die zum Transport von vergleichsweise leichten und wenig abrasiven Schüttgütern zu verwenden ist, so wird im vorliegenden Fall aus den bereitgestellten Bodenmodulen das Aluminium-Bodenmodul ausgewählt. Dann wird das ausgewählte Aluminium-Bodenmodul ebenfalls mit einem der bereitgestellten baugleichen Aluminium-Seitenwandmodul-Paare zu einem Kippmuldenkörper mit einer im Wesentlichen U-förmigen Querschnittsform zusammengesetzt, so dass die zwei oberen Längsränder des Aluminium-Bodenmoduls jeweils einem unteren Längsrand eines Aluminium-Seitenwandmoduls zugeordnet sind. Auch das Aluminium-Bodenmodul wird im Bereich seiner oberen Längsränder mit den unteren Längsrändern der Aluminium-Seitenwandmodule über eine Vielzahl von im Wesentlichen punktuellen Kaltfügestellen verbunden. An diese Schritte können sich wiederum Schritte zur Montage einer Vorder- und Rückwand anschließen.

Durch das beschriebene Verfahren können also unterschiedlich ausgestaltete Kippmulden mit unterschiedlichen Bodenmodulen unter Verwendung des im Wesentlichen stets gleichartigen Typs von Seitenwandmodulpaaren realisiert werden. Kleinere Serien von unterschiedlichen Kippmulden bzw. variierende Bauausführungen lassen sich daher sehr rationell und fertigungstechnisch einfach herstellen, da als Hauptbestandteile lediglich drei vorgefertigte longitudinale Modulkomponenten vorhanden sind, die bezogen auf ihre Längsorientierung nur an zwei einander zugeordneten Bereichen zusammenzufügen sind. Es wird somit nicht nur ein hoher Vorfertigungsgrad, sondern auch eine vereinfachte und rasch durchführbare Montage der Kippmulde verwirklicht.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs kann die erfindungsgemäße Kippmulde vielmehr auch andere als die oben konkret beschriebenen Ausgestaltungsformen annehmen. Die Kippmulde kann hierbei insbesondere Merkmale aufweisen, die eine Kombination aus den Merkmalen des Anspruches 1 und allen oder nur bestimmten Einzelmerkmalen der zugehörigen Unteransprüche darstellen.

Als Kaltfügestellen können beispielsweise auch Verbindungselemente verwendet werden, welche zwischen den einander zugeordneten Randabschnitten des jeweiligen Seitenwandmoduls und des Bodenmoduls angeordnet sind und zwei klauenartige Abschnitte besitzen, welche jeweils einen Randabschnitt umgreifen. Eine Überlappung der Längsränder der Seitenwandmodule und des Bodenmoduls kann ferner dadurch erzielt werden, dass Bereiche der Längsränder bzw. Randabschnitte zumindest teilweise ineinander greifen. Zudem ist es im Sinne der Erfindung möglich, die oben erläuterten Varianten der Kaltfügestellen untereinander zu kombinieren. Unter einem Langloch ist im Sinne der Erfindung auch eine runde Bohrung mit Übermaß in Bezug auf den Durchmesser eines in diese Bohrung eingesteckten Befestigungselementes oder eine Nut zu verstehen.

Bezugszeichen in den Ansprüchen, der Beschreibung und den Zeichnungen dienen lediglich dem besseren Verständnis der Erfindung und sollen den Schutzumfang nicht einschränken.

**Bezugszeichenliste**

Es bezeichnen:

| | |
|---|---|
| 2 | Kippmulde |
| 4 | Transportfahrzeug |
| 6 | Vorderwand |
| 8 | Rückwand (hier: mit Klappe) |
| 10 | Kippmuldenkörper |
| 12 | Seitenwandmodul(e) |
| 14 | Bodenmodul |
| 16 | Längsrand(er) von 12 |
| 16a | Randabschnitt (e) von 12 |
| 18 | Bodenmodul |
| 20 | Längsrand(er) von 18 |
| 20a | Randabschnitt (e) von 18 |
| 22 | Kaltfügestelle(n) |
| 24 | Schließringbolzen |
| 24a | Bolzenkörper |
| 24b | Kopf |
| 26 | Schließring |
| 28 | Langloch |
| 30 | Bohrung |
| 32 | Distanzstück |
| 32a | Scheibenförmiger Abschnitt von 32 |
| 32b | Ringförmiger Abschnitt von 32 |
| 34 | Dichtung/Flüssigkeitsdichtung |
| 36 | Erste hohlkehlenartige Vertiefung |
| 36a | Nase |
| 38 | Zweite hohlkehlenartige Vertiefung |
| 38a | Abstufung |
| 40 | Gewindebolzen |
| 42 | Mutter |
| 44 | Gewindebuchse |
| 46 | Schraube |
| 46a | Schraubenkopf |
| 48 | Verdickter Bereich von 16a |
| 50 | Hohlkammer |
| 52 | Nutenförmige Aussparung / Nut |
| 54 | Durchgangsbohrung |
| 56 | Sicherungselement |
| 58 | Schließringbolzen |
| 60 | Durchgangsbohrung |
| | |
| D | Dicke |
| H1 | Höhe von 32b |
| H2 | Höhe von 44 |
| S | Spiel |
| T | Tiefe |
| T1 | Plattendicke von 16a |
| Y | Detail |

**Patentansprüche**

1.  Kippmulde (2) für ein Transportfahrzeug (4), mit einem modulartig aufgebauten und aus mindestens drei longitudinalen Modulkomponenten (12, 12, 18) zusammengesetzten Kippmuldenkörper (10), der eine im Wesentlichen U-förmige oder halbkreisförmige Querschnittsform aufweist, umfassend:

    - zwei im Querschnitt im Wesentlichen spiegelbildlich ausgebildete, langgestreckte, plattenförmige Seitenwandmodule (12, 12), die ein Seitenwandmodulpaar bilden und eine erste und zweite Modulkomponente darstellen und jeweils einen unteren Längsrand (16, 16a) besitzen, und
    - mindestens ein langgestrecktes, plattenförmiges Bodenmodul (18), das eine dritte Modulkomponente darstellt und zwei obere Längsränder (20, 20a; 20, 20a) besitzt, die jeweils einem unteren Längsrand (16, 16a) eines Seitenwandmoduls zugeordnet sind,
    - wobei das Bodenmodul (18) und die Seitenwandmodule (12, 12) an den einander zugeordneten Längsrändern (16, 16a, 20, 20a) über Kaltfügestellen (22) miteinander verbunden sind, die in einem Bereich einander überlappender Randabschnitte (16a, 20a) von einander zugeordneten Längsrändern (16, 20) der Module (12, 12, 18) angeordnet sind,
    **dadurch gekennzeichnet, dass**
    die Kaltfügestellen (22) mit einer im Bereich der überlappenden Randabschnitte (16a, 20a) als Verbindungsbereich zwischen dem Bodenmodul (18) und dem Seitenwandmodul (12, 12) angeordneten Längsverschiebungsausgleichseinrichtung (28) zusammenwirken, welche eine durch ein unterschiedliches thermisches Längenausdehnungsverhalten der Seitenwandmodule (12, 12) und des Bodenmoduls (18) verursachte gegenseitige Längsverschiebung der einander zugeordneten Randabschnitte (16a, 20a) zulässt, wobei eine jeweilige Kaltfügestelle (22) mindestens ein Befestigungselement (24, 26, 32, 40, 42, 44, 46) und die Längsverschiebungsausgleichseinrichtung mindestens ein sich in Längsrichtung der Kippmulde (2) erstreckendes und in mindestens einem der einander überlappenden Randabschnitte (16a, 20a) vorgesehenes Langloch (28) aufweist, und
    - sich das Befestigungselement (24, 32, 40, 44, 46) durch das mindestens eine Langloch (28) hindurch erstreckt und die einander überlappenden Randabschnitte (16a, 20a) im Wesentlichen senkrecht zu deren Plattenebenen fest zusammenhält und gleichzeitig um einen vorbestimmten Betrag gegeneinander längsverschiebbar verbindet.

2.  Kippmulde (2) nach Anspruch 1,
    **dadurch gekennzeichnet, dass**
    die Kaltfügestellen in Form einer Vielzahl von im Wesentlichen punktuellen Kaltfügestellen (22) vorgesehen sind.

3.  Kippmulde (2) nach Anspruch 1 oder 2,
    **dadurch gekennzeichnet, dass**
    das Bodenmodul (18) und die Seitenwandmodule (12, 12) aus unterschiedlichen Materialien mit unterschiedlichen Materialeigenschaften hergestellt sind und das Material des Bodenmoduls (18) Materialeigenschaften besitzt, die ausgewählt sind aus einer Gruppe von Materialeigenschaften, umfassend:

    - eine höhere Abriebfestigkeit als das Material der Seitenwandelemente (12, 12), und/oder
    - eine höhere Schlagfestigkeit als das Material der Seitenwandelemente (12, 12), und/oder
    - einen niedrigeren Reibungskoeffizienten als das Material der Seitenwandelemente (12, 12), und/oder
    - eine höhere Korrosionsbeständigkeit als das Material der Seitenwandelemente (12, 12), und/oder
    - einen anderen Längenausdehnungskoeffizienten als das Material der Seitenwandelemente (12, 12), und/oder
    - einen anderen Wärmeausdehnungskoeffizienten als das Material der Seitenwandelemente (12, 12).

4.  Kippmulde (2) nach einem oder mehreren der vorhergehenden Ansprüche,
    **dadurch gekennzeichnet, dass**
    in beiden der sich jeweils überlappenden Randabschnitte (16a, 20a) eine Durchgangsöffnung (28, 30) vorgesehen ist, von der mindestens eine (28) ein Langloch (28) ist, und dass sich das Befestigungselement (24) durch die beiden Durchgangsöffnungen (28, 30) hindurch erstreckt.

5.  Kippmulde (2) nach einem oder mehreren der Ansprüche 1-4,
    **dadurch gekennzeichnet, dass**
    das Befestigungselement (24, 26, 32; 40, 42; 44, 46) die einander überlappenden Randabschnitte (16a, 20a) in einer senkrecht zu den Plattenebenen der Randabschnitte (16a, 20a) verlaufenden Richtung mit einem vorbestimmten Spiel (S) in der Art einer Losverbindung zusammenhält.

6.  Kippmulde (2) nach einem oder mehreren der Ansprüche 1-5,
    **dadurch gekennzeichnet, dass**
    das Befestigungselement (24, 26, 32; 40, 42; 44, 46) die einander überlappenden Randabschnitte (16a, 20a) in Richtung von deren Plattenebenen und senkrecht zur Längsrichtung der Module (12, 12, 18) im Wesentlichen fest und/oder spielfrei zusammenhält.

7. Kippmulde (2) nach einem oder mehreren der Ansprüche 1-6,
**dadurch gekennzeichnet, dass**
das Befestigungselement (24, 26, 32; 40, 42; 44, 46) die einander überlappenden Randabschnitte (16a, 20a) in Richtung von deren Plattenebenen und in Längsrichtung der Module (12, 12, 18) verschiebbar zusammenhält.

8. Kippmulde (2) nach einem oder mehreren der Ansprüche 1 bis 7,
**dadurch gekennzeichnet, dass**
das Langloch (28) und/oder die Durchgangsöffnung (30) um das eingreifende Befestigungselement (24, 32) herum mit einem gummielastischen Material ausgefüllt ist/sind.

9. Kippmulde (2) nach einem oder mehreren der Ansprüche 1-8,
**dadurch gekennzeichnet, dass**
zumindest an einem Teilabschnitt (36, 38) der überlappenden Randabschnitte (16a, 20a) eine Dichtung/Flüssigkeitsdichtung (34) zwischen den überlappenden Randabschnitten (16a, 20a) angeordnet ist, welche die einander zugeordneten Längsränder (16, 20) der Seitenwandmodule (12, 12) und des Bodenmoduls (18) über im Wesentlichen deren gesamte Länge durchgehend gegeneinander abdichtet.

10. Kippmulde (2) nach einem oder mehreren der vorhergenannten Ansprüche,
**dadurch gekennzeichnet, dass**
in dem Randbereich (16a) eines jeweiligen Seitenwandmoduls (12, 12) und/oder in dem Randbereich (20a) des Bodenmoduls (18) mindestens eine sich im Wesentlichen über die gesamte Länge des betreffenden Moduls (12, 18) erstreckende hohlkehlenartige Vertiefung (36, 38) ausgebildet ist, in welche eine Dichtung/Flüssigkeitsdichtung (34) eingefügt ist.

11. Kippmulde (2) nach einem oder mehreren der Ansprüche 1-10,
**dadurch gekennzeichnet, dass**
zwischen den überlappenden Randabschnitten (16a, 20a) eine Isolierungsschicht (34) angeordnet ist, welche das Material des Bodenmoduls (18) und das Material des jeweiligen Seitenwandmoduls (12) elektrolytisch voneinander isoliert.

12. Kippmulde (2) nach Anspruch 11,
**dadurch gekennzeichnet, dass**
die Isolierungsschicht eine Haft- und/oder Dichtungsmittelschicht ist.

**Claims**

1. Dumper (2) for a transport vehicle (4), with a modularly constructed dumper body (10) which is composed of at least three longitudinal module components (12, 12, 18) and which has an essentially U-shaped or semicircular cross-sectional shape, comprising:

   - two elongate plate-shaped side-wall modules (12, 12) which are designed essentially mirror-symmetrically in cross section and form a pair of side-wall modules and which constitute a first and a second module component and each posses a lower longitudinal edge (16, 16a), and
   - at least one elongate plate-shaped bottom module (18) which constitutes a third module component and possesses two upper longitudinal edges (20, 20a; 20, 20a) which are each assigned a lower longitudinal edge (16, 16a) of a side-wall module,
   - the bottom module (18) and the side-wall modules (12, 12) being connected to one another at the mutually assigned longitudinal edges (16, 16a, 20, 20a) via cold joints (22) which are arranged in a region of edge portions (16a, 20a) overlapping one another of mutually assigned longitudinal edges (16, 20) of the modules (12, 12, 18),

   **characterized in that**

   the cold joints (22) cooperate with a longitudinal-displacement compensation device (28) which is arranged in the region of overlapping edge portions (16a, 20a) as a connection region between the bottom module (18) and the side-wall module (12, 12) and which allows a reciprocal longitudinal displacement of the mutually assigned edge portions (16a, 20a) which is induced by a different thermal linear expansion behaviour of the side-wall modules (12, 12) and of the bottom module (18), wherein,

   a respective cold joint (22) has at least one fastening element (24, 26, 32, 40, 42, 44, 46), and the longitudinal-displacement compensation device has at least one long hole (28) extending in the longitudinal direction of the dumper (2) and provided in at least one of the edge portions (16a, 20a) overlapping one another, and
   - the fastening element (24, 32, 40, 44, 46) extends through the at least one long hole (28) and firmly holds together, essentially perpendicularly to their plate planes, the edge portions (16a, 20a) overlapping one another and at the same time connects the said edge portions longitudinally displacably relative to one another by a predetermined amount.

2. Dumper (2) according to Claim 1,
**characterized in that**
the cold joints are provided in the form of a multiplicity of essentially punctiform cold joints (22).

3. Dumper (2) according to Claim 1 or 2,
**characterized in that**
the bottom module (18) and the side-wall modules (12, 12) are produced from different materials having different material properties, and the material of the bottom module (18) possessing material properties which are selected from a group of material properties comprising,

- a higher abrasion resistance than the material of the side-wall elements (12, 12) and/or
- a higher impact resistance than the material of the side-wall elements (12, 12) and/or
- a lower coefficient of friction than the material of the side-wall elements (12, 12) and/or
- a higher corrosion resistance than the material of the side-wall elements (12, 12) and/or
- a different linear expansion coefficient from the material of the side-wall elements (12, 12) and/or
- a different thermal expansion coefficient from the material of the side-wall elements (12, 12).

4. Dumper (2) according to one or more of the preceding claims,
**characterized in that**,
in both of the edge portions (16a, 20a) overlapping one another in each case, a passage orifice (28, 30) is provided, of which at least one (28) is a long hole (28), and **in that** the fastening element (24) extends through the two passage orifices (28, 30).

5. Dumper (2) according to one or more of Claims 1 - 4,
**characterized in that**
the fastening element (24, 26, 32; 40, 42; 44, 46) holds together the edge portions (16a, 20a) overlapping one another, with a predetermined play (S) in the manner of a loose connection, in a direction running perpendicularly to the plate planes of the edge portions (16a, 20a).

6. Dumper (2) according to one or more of Claims 1 - 5,
**characterized in that**
the fastening element (24, 26, 32; 40, 42; 44, 46) holds together, essentially firmly and/or free of play, the edge portions (16a, 20a) overlapping one another, in the direction of their plate planes and perpendicularly to the longitudinal direction of the modules (12, 12, 18).

7. Dumper (2) according to one or more of Claims 1 - 6,

**characterized in that**
the fastening element (24, 26, 32; 40, 42; 44, 46) holds together displacably the edge portions (16a, 20a) overlapping one another, in the direction of their plate planes and in the longitudinal direction of the modules (12, 12, 18).

8. Dumper (2) according to or one or more of Claims 1 - 7 with reference back to Claim 5,
**characterized in that**
the long hole (28) and/or the passage orifice (30) are/is filled with an elastomeric material around the engaging fastening element (24, 32).

9. Dumper (2) according to one or more of Claims 1 - 8,
**characterized in that**,
at least on a part-portion (36, 38) of the overlapping edge portions (16a, 20a), a seal/liquid seal (34) is arranged between the overlapping edge portions (16a, 20a), which seals off the mutually assigned longitudinal edges (16, 20) of the side-wall modules (12, 12) and of the bottom module (18) continuously relative to one another essentially over their entire length.

10. Dumper (2) according to one or more of the abovementioned claims,
**characterized in that**,
in the edge region (16a) of a respective side-wall module (12, 12) and/or in the edge region (20a) of the bottom module (18), at least one groove-like depression (36, 38) is formed, which extends essentially over the entire length of the respective module (12, 18) and into which a seal/liquid seal (34) is inserted.

11. Dumper (2) according to one or more of Claims 1 - 10,
**characterized in that**,
between the overlapping edge portions (16a, 20a), an insulating layer (34) is arranged, which insulates the material of the bottom module (18) and the material of the respective side-wall module (12) electrolytically from one another.

12. Dumper (2) according to Claim 11,
**characterized in that**
the insulating layer is an adhesive and/or sealant layer.

## Revendications

1. Benne basculante (2) pour un véhicule de transport (4), comprenant un corps de benne basculante (10) présentant une structure modulaire et composé d'au moins trois composantes de module (12, 12, 18) longitudinales, la section transversale dudit corps de benne basculante présentant une forme essentiellement en U ou semi-circulaire, comprenant :

- deux modules de paroi latérale (12, 12) réalisés dans la section transversale essentiellement de manière symétrique en miroir, allongés et présentant une forme de panneau, lesquels forme une paire de modules de paroi latérale et constituent une première et une deuxième composante de module et comportent respectivement un bord longitudinal inférieur (16, 16a), et
- au moins un module de fond (18) allongé, présentant une forme de panneau, lequel constitue une troisième composante de module et comporte deux bords longitudinaux supérieurs (20, 20a), lesquels sont respectivement associés à un bord longitudinal inférieur (16, 16a) d'un module de paroi latérale,
- sachant que le module de fond (18) et les modules de paroi latérale (12, 12) sont reliés les uns aux autres au niveau des bords longitudinaux (16, 16a, 20, 20a) associés les uns aux autres par l'intermédiaire de points de jonction à froid (22), lesquels sont disposés dans une zone de sections de bord (16a, 20a) se superposant les unes les autres de bords longitudinaux (16, 20), associés les uns aux autres, des modules (12, 12, 18),
**caractérisée en ce**
**que** les points de jonction à froid (22) coopèrent avec un système de compensation de déplacement longitudinal (28) disposé dans la zone des sections de bord (16a, 20a) se chevauchant en tant que zone d'assemblage entre le module de fond (18) et le module de paroi latérale (12, 12), lequel système de compensation de déplacement longitudinal autorise un déplacement longitudinal opposé des sections de bord (16a, 20a) associées les unes aux autres, provoqué par un comportement différent d'extension en longueur lié aux températures des modules de paroi latérale (12, 12) et du module de fond (18), sachant
**qu'**un point de jonction à froid (22) respectif présente au moins un élément de fixation (24, 26, 32, 40, 42, 44, 46) et que le système de compensation de déplacement longitudinal présente au moins un trou oblong (28) s'étendant dans la direction longitudinale de la benne basculante (2) et prévu dans au moins une des sections de bord (16a, 20a) se chevauchant les unes les autres, et
- sachant que l'élément de fixation (24, 32, 40, 44, 46) s'étend à travers le trou oblong (28) au moins au nombre de un, maintient les sections de bord (16a, 20a) se chevauchant les unes les autres essentiellement de manière perpendiculaire par rapport à leurs plans de panneau et relie ces dernières simultanément de manière à pouvoir être déplacées longitudinalement en sens inverse d'une valeur prédéterminée.

**2.** Benne basculante (2) selon la revendication 1, **caractérisée en ce que** les points de jonction à froid sont prévus sous la forme d'une pluralité de joints de jonction à froid (22) essentiellement ponctuels.

**3.** Benne basculante (2) selon la revendication 1 ou 2, **caractérisée en ce que** le module de fond (18) et les modules de paroi latérale (12, 12) sont fabriqués à partir de divers matériaux présentant diverses caractéristiques de matériau, et en ce que le matériau du module de fond (18) comporte des caractéristiques de matériau qui sont choisies parmi un groupe de caractéristiques de matériau, comprenant :

- une meilleure résistance à l'usure que celle du matériau des éléments de paroi latérale (12, 12), et/ou
- une meilleure résistance aux chocs que celle du matériau des éléments de paroi latérale (12, 12), et/ou
- un abaissement du coefficient de friction celui du matériau des éléments de paroi latérale (12, 12), et/ou
- une meilleure résistance à la corrosion que celle du matériau des éléments de paroi latérale (12, 12), et/ou
- un coefficient d'extension en longueur autre que celui du matériau des éléments de paroi latérale (12, 12), et/ou
- un coefficient de dilatation thermique autre que celui du matériau des éléments de paroi latérale (12, 12).

**4.** Benne basculante (2) selon l'une quelconque ou plusieurs des revendications précédentes, **caractérisée en ce qu'**est prévu, dans les deux sections de bord (16a, 20a) se chevauchant respectivement, un orifice de passage (28, 30), dont l'un est un trou oblong (28), et en ce que l'élément de fixation (24) s'étend à travers les deux orifices de passage (28, 30).

**5.** Benne basculante (2) selon l'une quelconque ou plusieurs des revendications 1 à 4, **caractérisée en ce que** l'élément de fixation (24, 26, 32 ; 40, 42 ; 44, 46) maintient les sections de bord (16a, 20a) se chevauchant les unes les autres dans une direction, s'étendant de manière perpendiculaire par rapport aux plans de panneau des sections de bord (16a, 20a), avec un jeu (S) prédéterminé, à la manière d'un assemblage lâche.

**6.** Benne basculante (2) selon l'une quelconque ou plusieurs des revendications 1 à 5, **caractérisée en ce que** l'élément de fixation (24, 26, 32 ; 40, 42 ; 44, 46) maintient essentiellement de manière fixe et/ou sans jeu, les sections de bord (16a, 20a) se chevauchant les unes les autres dans la direction des plans de panneau de ces dernières et de manière perpendiculaire par rapport à la direction longitudinale des modules (12, 12, 18).

**7.** Benne basculante (2) selon l'une quelconque ou plusieurs des revendications 1 à 6, **caractérisée en ce que** l'élément de fixation (24, 26, 32 ; 40, 42 ; 44, 46) maintient, de manière à ce qu'elles puissent se déplacer, les sections de bord (16a, 20a) se chevauchant les unes les autres dans la direction de leurs plans de panneau et dans la direction longitudinale des modules (12, 12, 18).

**8.** Benne basculante (2) selon l'une quelconque ou plusieurs des revendications 1 à 7, **caractérisée en ce que** le trou oblong (28) et/ou l'orifice de passage (30) sont remplis, tout autour de l'élément de fixation (24, 32) venant en prise d'un matériau élastique.

**9.** Benne basculante (2) selon l'une quelconque ou plusieurs des revendications 1 à 8, **caractérisée en ce qu'**est disposé, au moins au niveau d'une section partielle (36, 38) des sections de bord (16a, 20a) se chevauchant, un joint d'étanchéité/un joint d'étanchéité hydraulique (34) entre les sections de bord (16a, 20a) se chevauchant, lequel joint étanchéifie en continu les uns des autres, sur essentiellement toute leur longueur, les bords longitudinaux (16, 20) associés les unes aux autres des modules de paroi latérale (12, 12) et du module de fond (18).

**10.** Benne basculante (2) selon l'une quelconque ou plusieurs des revendications précédentes, **caractérisée en ce qu'**est réalisé, dans la zone de bord (16a) d'un module de paroi latérale (12, 12) respectif et/ou dans la zone de paroi (20a) du module de fond (18), au moins un creux (36, 38) présentant une forme de cône creux s'étendant essentiellement sur toute la longueur du module (12, 18) concerné, dans lequel creux est inséré un joint d'étanchéité/un joint d'étanchéité hydraulique (34).

**11.** Benne basculante (2) selon l'une quelconque ou plusieurs des revendications 1 à 10, **caractérisée en ce qu'**est disposée entre les sections de bord (16a, 20a) se chevauchant, une couche d'isolation (34), qui isole l'un de l'autre le matériau du module de fond (18) et le matériau du module de paroi latérale (12) respectif par électrolyse.

**12.** Benne basculante (2) selon la revendication 11, **caractérisée en ce que** la couche d'isolation est une couche d'agent adhésif et/ou une couche de moyen d'étanchéité.

# FIG. 1

EP 1 319 584 B2

# FIG. 2

**FIG. 3**

12
24
22
26
18

**FIG. 4**

12
36a
20
20a  34
30
24b
24a
16a
34
18
H1
38a
16
38
32a
32b
26
22
24
X
T1
S
36
32
28

# FIG. 5

# FIG. 6

FIG. 7

12

S

D

20a

16a

50

52

48

54

22

18

50

46a

44

46

T

H2

FIG. 8

12

20a

60

56

58

18

16a

22

**EP 1 319 584 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19808123 A1
- DE 19808122 A1
- US 1469320 A
- GB 2209139 A
- US 5681095 A
- US 5454620 A